# EUROPEAN PATENT SPECIFICATION

(11) **EP 3 214 865 B1**
(45) Date of publication and mention of the grant of the patent: **14.11.2018**
(21) Application number: 15863647.2
(22) Date of filing: 21.04.2015
(51) Int. Cl.: H04L 12/24, H04W 24/04, G06F 11/16, G06F 11/20

(54) **CLUSTER ARBITRATION METHOD AND MULTI-CLUSTER COORDINATION SYSTEM**
CLUSTER-ARBITRIERUNGSVERFAHREN UND MULTI-CLUSTER-KOORDINIERUNGSSYSTEM
PROCÉDÉ D'ARBITRAGE DE GRAPPE ET SYSTÈME DE COORDINATION DE GRAPPES MULTIPLES

(30) Priority: 27.11.2014 CN 201410705888
(43) Date of publication of application: 06.09.2017
(60) Divisional application: 18183960.6
(73) Proprietor: Huawei Technologies Co., Ltd., Longgang District Shenzhen, Guangdong 518129 (CN)
(72) Inventor: CHEN, Xiaoli, Shenzhen Guangdong 518129 (CN); ZENG, Jingyong, Shenzhen Guangdong 518129 (CN)
(74) Representative: Pfenning, Meinig & Partner mbB
(86) International application number: PCT/CN2015/077092
(87) International publication number: WO 2016/082443

(56) References cited:
- CN-A- 103 684 941
- CN-A- 104 158 707
- CN-A- 104 469 699
- US-A1- 2010 306 573
- US-A1- 2012 197 822
- US-B1- 6 279 032
- US-B1- 8 108 715

## Description

### TECHNICAL FIELD

The present invention relates to the mobile communications field, and in particular, to a cluster arbitration method and a multi-cluster cooperation system.

### BACKGROUND

Active-active data centers mean that both the two data centers are in a running state and can bear services simultaneously, which improves an overall service capability and system resource utilization of the data centers. The two data centers are mutually redundant. When one data center is faulty, services can be automatically switched to the other data center with zero data loss.

The active-active data centers generally include a storage layer, a network layer, and an application layer. There are several clusters deployed in the active-active data centers. One portion of each cluster is located in one data center, and the other portion of the cluster is located in the other data center. All sub-clusters of each data center cooperate with each other.

However, each cluster in the active-active data centers has a different arbitration mechanism. When a fault occurs, each cluster uses its own arbitration mechanism to arbitrate. As a result, arbitration results of the clusters are not always consistent. That is, it may occur that, for some clusters, their sub-clusters located in one data center survive, and for some clusters, their sub-clusters located in the other data center survive. This further results in a probabilistic situation of interruption of entire service access.

US 6279032 B1 discloses a system in a cluster is a node, wherein systems are separated into two or more distinct member sets. Systems within a member set communicate among themselves, but not with any system of any other set.

US 2010/306573 A1 relates to detecting a failure in a failed one of a plurality of nodes included in a cluster, and fences a portion of the plurality of nodes, including the failed one.

### SUMMARY

A cluster arbitration method and a multi-cluster cooperation system according to the independent claims are provided. Dependent claims provide preferred embodiments.

The embodiments and/or examples of the following description which are not covered by the appended claims are considered as not being part of the present invention. Embodiments of the present invention provide a cluster arbitration method, which can reduce a probability of interruption of service access.

A first aspect of the embodiments of the present invention provides a cluster arbitration method, including:
detecting whether a fault has occurred in a first cluster group or a second cluster group, where the first cluster group includes one portion of a first cluster and one portion of a second cluster, the second cluster group includes another portion of the first cluster and another portion of the second cluster, and the first cluster and the second cluster cooperate with each other; and
when detecting that a fault has occurred, determining, by the first cluster group and the second cluster group, respective preemption representatives, where both the preemption representative of the first cluster group and the preemption representative of the second cluster group perform the following steps:
   determining whether a fault has occurred in the respective cluster group; and
   if no fault has occurred in the respective cluster group, attempting to preempt an arbitration device, where a cluster group whose preemption representative has successfully preempted the arbitration device according to a preset arbitration mechanism survives.

With reference to the first aspect of the embodiments of the present invention, in a first implementation of the first aspect of the embodiments of the present invention, both the preemption representative of the first cluster group and the preemption representative of the second cluster group further perform the following step:
if determining that a fault has occurred in the respective cluster group, detecting whether the other cluster group has attempted to preempt the arbitration device within a preset time, where, if the other cluster group has not attempted to preempt the arbitration device within the preset time, the first cluster attempts to preempt the arbitration device by using a first preset mechanism, or the second cluster attempts to preempt the arbitration device by using a second preset mechanism.

With reference to the first aspect of the embodiments of the present invention, in a second implementation of the first aspect of the embodiments of the present invention, after the determining whether a fault has occurred in the respective cluster group, the method further includes:
when both the preemption representative of the first cluster group and the preemption representative of the second cluster group determine that no fault has occurred in the respective cluster group, attempting, by both the preemption representative of the first cluster group and the preemption representative of the second cluster group, to preempt the arbitration device, where it is preset that the preemption representative of the second cluster group makes a concession.

With reference to the second implementation of the first aspect of the embodiments of the present invention, in a third implementation of the first aspect of the embodiments of the present invention, the preset arbitration mechanism is that a preemption representative that is the first to preempt the arbitration device preempts the arbitration device successfully; and
that it is preset that the preemption representative of the second cluster group makes a concession specifically includes:
presetting that the preemption representative of the second cluster group attempts to preempt the arbitration device a preset time later after determining that no fault has occurred in the respective cluster group.

With reference to the first aspect of the embodiments of the present invention, in a fourth implementation of the first aspect of the embodiments of the present invention, the first cluster group and the second cluster group are located in active-active data centers, where the first cluster group is located in one data center, and the second cluster group is located in the other data center.

A second aspect of the embodiments of the present invention provides a multi-cluster cooperation system, including:
a first cluster group, a second cluster group, and an arbitration device, where the first cluster group includes one portion of a first cluster and one portion of a second cluster, the second cluster group includes another portion of the first cluster and another portion of the second cluster, the first cluster and the second cluster cooperate with each other, and the arbitration device is provided with a preset arbitration mechanism;
the first cluster group and the second cluster group are configured to determine respective preemption representatives when detecting that a fault has occurred in the first cluster group and the second cluster group; and
both the preemption representative of the first cluster group and the preemption representative of the second cluster group are configured to determine whether a fault has occurred in the respective cluster group; and if no fault has occurred in the respective cluster group, attempt to preempt the arbitration device, where a cluster group whose preemption representative has successfully preempted the arbitration device according to the preset arbitration mechanism survives.

With reference to the second aspect of the embodiments of the present invention, in a first implementation of the second aspect of the embodiments of the present invention, the arbitration device is further provided with a first preset mechanism and a second preset mechanism; and
both the preemption representative of the first cluster group and the preemption representative of the second cluster group are further configured to: when determining that a fault has occurred in the respective cluster group, detect whether the other cluster group has attempted to preempt the arbitration device within a preset time, where, if the other cluster group has not attempted to preempt the arbitration device within the preset time, the first cluster attempts to preempt the arbitration device by using the first preset mechanism, or the second cluster attempts to preempt the arbitration device by using the second preset mechanism.

With reference to the second aspect of the embodiments of the present invention, in a second implementation of the second aspect of the embodiments of the present invention, the preemption representative of the second cluster group is further configured to make a concession when both the preemption representative of the first cluster group and the preemption representative of the second cluster group determine that no fault has occurred in the respective cluster group, and when both the preemption representative of the first cluster group and the preemption representative of the second cluster group attempt to preempt the arbitration device.

With reference to the second implementation of the second aspect of the embodiments of the present invention, in a third implementation of the second aspect of the embodiments of the present invention, the preset arbitration mechanism is that a preemption representative that is the first to preempt the arbitration device preempts the arbitration device successfully; and
the preemption representative of the second cluster group is specifically configured to attempt to preempt the arbitration device a preset time later after determining that no fault has occurred in the respective cluster group.

With reference to the second aspect of the embodiments of the present invention, in a fourth implementation of the second aspect of the embodiments of the present invention, the multi-cluster cooperation system is active-active data centers, where the first cluster group is located in one data center, and the second cluster group is located in the other data center.

It can be seen from the foregoing solution that the embodiments of the present invention have the following advantages:
In the embodiments of the present invention, when a fault occurs, a first cluster group and a second cluster group determine respective preemption representatives to attempt to preempt an arbitration device, and all sub-clusters in a cluster group that succeeds in the preemption survive. This ensures a consistent arbitration result for different clusters when a fault occurs, so that a surviving cluster group can continue service provision.

### BRIEF DESCRIPTION OF DRAWINGS

FIG. 1 is a flowchart of a cluster arbitration method according to an embodiment of the present invention; and
FIG. 2 is a schematic structural diagram of a multi-cluster cooperation system according to an embodiment of the present invention.

### DESCRIPTION OF EMBODIMENTS

Embodiments of the present invention provide a cluster arbitration method and a multi-cluster cooperation system, intended to reduce a probability of interruption of service access.

To make persons skilled in the art understand the technical solutions in the present invention better, the following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention shall fall within the protection scope of the present invention.

In the specification, the claims, and the accompanying drawings of the present invention, the terms "include", "contain" and any other variants mean to cover a non-exclusive inclusion. For example, a process, method, system, product, or device that includes a list of steps or units is not necessarily limited to those steps or units, but may include other steps or units not expressly listed or inherent to such a process, method, system, product, or device.

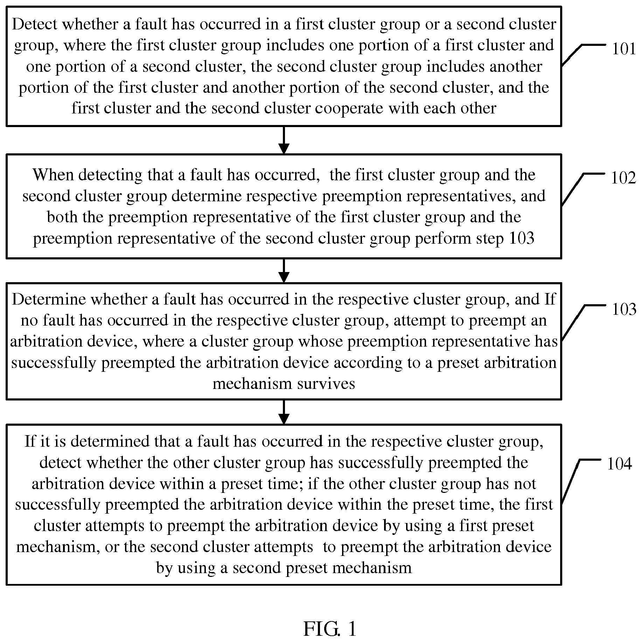

Referring to FIG. 1, a cluster arbitration method according to an embodiment of the present invention includes:
101. Detect whether a fault has occurred in a first cluster group and a second cluster group, where the first cluster group includes one portion of a first cluster and one portion of a second cluster, the second cluster group includes another portion of the first cluster and another portion of the second cluster, and the first cluster and the second cluster cooperate with each other.

In this embodiment, of the first cluster, one portion of nodes are configured in the first cluster group, and another portion of nodes are configured in the second cluster group. These two portions of nodes respectively form two sub-clusters of the first cluster. Of the second cluster, one portion of nodes are configured in the first cluster group, and another portion of nodes are configured in the second cluster group. These two portions of nodes respectively form two sub-clusters of the second cluster. The first cluster and the second cluster cooperate with each other, and the first cluster group and the second cluster group bear services simultaneously and are mutually redundant.

Specifically, for example, the first cluster group and the second cluster group are active-active data centers. One VIS6600T is deployed at a storage layer in each of the two data centers. The two VIS6600Ts form a VIS cluster, providing read and write services for host services of both the two data centers. An Oracle RAC cluster is deployed at an application layer of the two data centers. Of the Oracle RAC cluster, one portion of nodes are configured in one data center, and the other portion of nodes are configured in the other data center.

It should be noted that clusters in the first cluster group and the second cluster group are not limited to the first cluster and the second cluster, and may further include another cluster. For example, the first cluster group and the second cluster group further include a third cluster. Of the third cluster, one portion of nodes are configured in the first cluster group, and another portion of nodes are configured in the second cluster group.

A sub-cluster that is of the first cluster and in the first cluster group and a sub-cluster that is of the second cluster and in the first cluster group communicate with each other. Similarly, a sub-cluster that is of the first cluster and in the second cluster group and a sub-cluster that is of the second cluster and in the second cluster group communicate with each other. Moreover, the sub-cluster that is of the first cluster and in the first cluster group and the sub-cluster that is of the first cluster and in the second cluster group periodically obtain an operating status of each other by using a cluster IP heartbeat link. The sub-cluster that is of the second cluster and in the first cluster group and the sub-cluster that is of the second cluster and in the second cluster group periodically obtain an operating status of each other by using the cluster IP heartbeat link.

When a cluster in one cluster group is faulty, another cluster in this cluster group cannot communicate with the cluster. Then, clusters in this cluster group may determine that a fault has occurred in the cluster group. Accordingly, when an operating status of the faulty cluster cannot be obtained, a cluster that is in another cluster group and that communicates with the faulty cluster may determine that a fault has occurred in the faulty cluster, and send a message that the cluster is faulty to another cluster in the another cluster group.

Alternatively, when the cluster IP heartbeat link is faulty, causing the sub-cluster that is of the first cluster and in the first cluster group and the sub-cluster that is of the first cluster and in the second cluster group unable to obtain an operating status of each other, or causing the sub-cluster that is of the second cluster and in the first cluster group and the sub-cluster that is of the second cluster and in the second cluster group unable to obtain an operating status of each other, it may be further determined that a fault has occurred in the first cluster group or the second cluster group.
102. When detecting that a fault has occurred, the first cluster group and the second cluster group determine respective preemption representatives, and both the preemption representative of the first cluster group and the preemption representative of the second cluster group perform step 103.

When determining that a fault has occurred, the first cluster group and the second cluster group determine their respective preemption representatives according to a preset mechanism. The preemption representative is configured to represent the respective cluster group to attempt to preempt an arbitration device. All clusters in a cluster group whose preemption representative has preempted the arbitration device survive and continue service provision, while all sub-clusters in the other cluster group stop service provision.

There may be multiple mechanisms for determining a preemption representative. For example, it may be preset that a node with a smallest node number is selected as a preemption representative, or that a last started node is used as a preemption representative, and no limitation is imposed herein. Alternatively, the preemption representative may not be one node in a cluster group, but be multiple nodes or one sub-cluster, and no limitation is imposed herein.

A mechanism for determining the preemption representative of the first cluster group may be the same as or different from a mechanism for determining the preemption representative of the second cluster group, and no limitation is imposed herein. After the first cluster group and the second cluster group have determined the respective preemption representatives, both the two preemption representatives perform step 103.
103. Determine whether a fault has occurred in the respective cluster group; and if no fault has occurred in the respective cluster group, attempt to preempt an arbitration device, where a cluster group whose preemption representative has successfully preempted the arbitration device according to a preset arbitration mechanism survives.

All sub-clusters in the cluster group whose preemption representative has successfully preempted the arbitration device survive and continue service provision. Because all sub-clusters in a cluster group cooperate with each other, if a fault occurs in the cluster group, and some sub-clusters cannot provide services, service interruption is also caused. Therefore, before attempting to preempt the arbitration device, both the preemption representatives determine whether a fault has occurred in the respective cluster group.

After determining that no fault has occurred in the respective cluster group, the preemption representative attempts to preempt the arbitration device according to the preset arbitration mechanism. Multiple preset arbitration mechanisms are available, which are prior arts and are not elaborated herein. A cluster group whose preemption representative has successfully preempted the arbitration device continues to survive, and the other cluster group "kills itself" and stops service provision.

If the preemption representative finds that a fault has occurred in the respective cluster group, the preemption representative quits a preemption.

In this embodiment of the present invention, when a fault occurs, a first cluster group and a second cluster group determine respective preemption representatives to attempt to preempt an arbitration device, and all sub-clusters in a cluster group that succeeds in the preemption survive. This ensures a consistent arbitration result for different clusters when a fault occurs, so that a surviving cluster group can continue service provision.

However, there may be a situation that both the two preemption representatives find that a fault has occurred in the respective cluster group and therefore do not participate in the preemption, although such probability is low. Therefore, preferably, in step 102 of the cluster arbitration method of the present invention, both the preemption representative of the first cluster group and the preemption representative of the second cluster group further perform step 104.
104. If it is determined that a fault has occurred in the respective cluster group, detect whether the other cluster group has preempted the arbitration device successfully within a preset time, where, if the other cluster group has not preempted the arbitration device successfully within the preset time, the first cluster attempts to preempt the arbitration device by using a first preset mechanism, or the second cluster attempts to preempt the arbitration device by using a second preset mechanism.

When a preemption representative of a cluster group determines that a fault has occurred in the cluster group, while quitting the preemption, the preemption representative further detects whether a preemption representative of the other cluster group has successfully preempted the arbitration device within the preset time. If the preemption representative of the other cluster group has not successfully preempted the arbitration device within the preset time, it means that a fault has occurred in both the two cluster groups. Therefore, the one portion of the first cluster that is in the first cluster group and the another portion of the first cluster that is in the second cluster group use the first preset mechanism to attempt to preempt the arbitration device; and the one portion of the second cluster that is in the first cluster group and the another portion of the second cluster that is in the second cluster group use the second preset mechanism to attempt to preempt the arbitration device. The first preset mechanism and the second preset mechanism are respectively original arbitration mechanisms of the first cluster and the second cluster. The first preset mechanism and the second preset mechanism may be the same, or may be different.

In this way, even though the first cluster group or the second cluster group is in a situation that not the entire first cluster group or second cluster group can survive, the clusters can still make best efforts to ensure service continuity.

In this embodiment, in a case of a link failure or another failure when sub-clusters in the first cluster group and sub-clusters in the second cluster group can still continue to survive, of the first cluster group and the second cluster group, which cluster group continues service provision and which cluster group "kills itself" and stops service provision depend on which cluster group has a preemption representative successfully preempting the arbitration device.

In practical application, which cluster group survives in precedence in this case may be further preset. For example, it may be preset that the first cluster group survives in precedence. Then, when both the preemption representative of the first cluster group and the preemption representative of the second cluster group attempt to preempt the arbitration device, the preemption representative of the second cluster group makes a concession, to ensure that the preemption representative of the first cluster group can successfully preempt the arbitration device.

Specifically, for example, the preset arbitration mechanism is that a preemption representative that is the first in time to preempt the arbitration device preempts the arbitration device. When the two preemption representatives attempt to preempt the arbitration device, it is preset that, after determining that no fault has occurred in the respective cluster group, the preemption representative of the second cluster group waits for a preset time before attempting to preempt the arbitration device. This can ensure that the preemption representative of the first cluster group is the first to preempt the arbitration device.

For ease of understanding, the following uses a practical application scenario to describe the cluster arbitration method of this embodiment of the present invention.

At a storage layer of active-active data centers, one VIS6600T is deployed in both a data center 1 and a data center 2. The two VIS6600Ts form a VIS cluster. At an application layer of the active-active data centers, an Oracle RAC cluster is provided. Of the Oracle RAC cluster, one portion of nodes are configured in the data center 1, and the other portion of nodes are configured in the data center 2. Virtual machine servers of the two data centers further form a virtual machine cluster, and respective core switches of the two data centers form a core switch cluster. The active-active data centers are further provided with an arbitration device.

A cluster IP heartbeat link and an FC data transmission network are used between the two data centers of the active-active data centers for transfer of control information and configuration information and data synchronization.

The active-active data centers are preset as follows: The VIS cluster, the Oracle RAC cluster, the virtual machine cluster, and the core switch that are in the data center 1 belong to Group 1; and the VIS cluster, the Oracle RAC cluster, the virtual machine cluster, and the core switch that are in the data center 2 belong to Group2.

When the cluster IP heartbeat link is faulty, the data centers 1 and 2 each select a node with a smallest node number from respective nodes as a preemption representative. The preemption representatives of both the data centers 1 and 2 determine whether a fault has occurred in a cluster in the respective data center. If a fault has occurred in a cluster in one data center, and no fault has occurred in any cluster in the other data center, a preemption representative of the data center in which no fault has occurred attempts to preempt the arbitration device and succeeds in the preemption.

If no fault has occurred in any cluster in the two data centers, one of the preemption representatives of the two data centers that is the first to preempt the arbitration device succeeds in the preemption. All clusters in the data center whose preemption representative has succeeded in preemption continue to survive, so that the data center continues service provision, while all clusters in the other data center "kill themselves" and stop service provision.

If the preemption representatives of both the two data centers detect that a fault has occurred in a cluster in the respective data center, both the preemption representatives further detect whether the preemption representative of the other data center has successfully preempted the arbitration device within a preset time. When it is determined that the preemption representative of the other data center has not successfully preempted the arbitration device, the VIS cluster, the Oracle RAC cluster, the virtual machine cluster, and the core switch cluster in each of the two data centers use respective original arbitration mechanisms of the clusters to attempt to preempt the arbitration device.

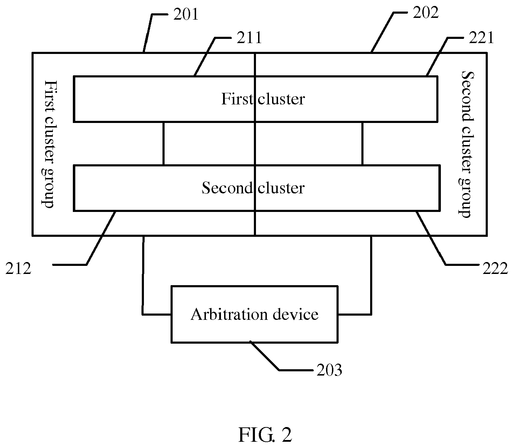

The foregoing describes the cluster arbitration method in the embodiments of the present invention. The following describes a multi-cluster cooperation system in the embodiments of the present invention. Referring to FIG. 2, a multi-cluster cooperation system 200 in an embodiment of the present invention includes:
a first cluster group 201, a second cluster group 202, and an arbitration device 203, where the first cluster group 201 includes one portion 211 of a first cluster and one portion 221 of a second cluster, the second cluster group 202 includes another portion 212 of the first cluster and another portion 222 of the second cluster, the first cluster and the second cluster cooperate with each other, and the arbitration device 203 is provided with a preset arbitration mechanism.

The first cluster group 201 and the second cluster group 202 are configured to determine respective preemption representatives when detecting that a fault has occurred in the first cluster group 201 and the second cluster group 202.

Both the preemption representative of the first cluster group 201 and the preemption representative of the second cluster group 202 are configured to determine whether a fault has occurred in the respective cluster group; and if no fault has occurred in the respective cluster group, attempt to preempt the arbitration device 203, where a cluster group whose preemption representative has successfully preempted the arbitration device according to the preset arbitration mechanism survives.

In this embodiment of the present invention, when a fault occurs, a first cluster group and a second cluster group determine respective preemption representatives to attempt to preempt an arbitration device in arbitration devices, and all sub-clusters in a cluster group that succeeds in the preemption survive. This ensures a consistent arbitration result for different clusters when a fault occurs, so that a surviving cluster group can continue service provision.

Preferably, the arbitration device 203 is further provided with a first preset mechanism and a second preset mechanism.

Both the preemption representative of the first cluster group 201 and the preemption representative of the second cluster group 202 are further configured to: when determining that a fault has occurred in the respective cluster group, detect whether the other cluster group has attempted to preempt the arbitration device within a preset time. If the other cluster group has not attempted to preempt the arbitration device within the preset time, the first cluster attempts to preempt the arbitration device by using the first preset mechanism, or the second cluster attempts to preempt the arbitration device by using the second preset mechanism.

Preferably, the preemption representative of the second cluster group 202 is further configured to make a concession when both the preemption representative of the first cluster group 201 and the preemption representative of the second cluster group 202 attempt to preempt the arbitration device.

Preferably, the preset arbitration mechanism is that a preemption representative that is the first to preempt the arbitration device preempts the arbitration device successfully. The preemption representative of the second cluster group 202 is configured to attempt to preempt the arbitration device a preset time later after determining that no fault has occurred in the respective cluster group.

Preferably, the multi-cluster cooperation system is active-active data centers, where the first cluster group is located in one data center, and the second cluster group is located in the other data center.

For ease of understanding, the following uses a practical application scenario to describe the multi-cluster cooperation system in this embodiment of the present invention.

In this embodiment, the multi-cluster cooperation system is active-active data centers. At a storage layer of the active-active data centers, one VIS6600T is deployed in both a data center 1 and a data center 2. The two VIS6600Ts form a VIS cluster. At an application layer of the active-active data centers, an Oracle RAC cluster is provided. Of the Oracle RAC cluster, one portion of nodes are configured in the data center 1, and the other portion of nodes are configured in the data center 2. Virtual machine servers of the two data centers further form a virtual machine cluster, and respective core switches of the two data centers form a core switch cluster. The active-active data centers are further provided with an arbitration device.

A cluster IP heartbeat link and an FC data transmission network are used between the two data centers of the active-active data centers for transfer of control information and configuration information and data synchronization.

The active-active data centers are preset as follows: The VIS cluster, the Oracle RAC cluster, the virtual machine cluster, and the core switch that are in the data center 1 belong to Group 1; and the VIS cluster, the Oracle RAC cluster, the virtual machine cluster, and the core switch that are in the data center 2 belong to Group2.

When the cluster IP heartbeat link is faulty, the data centers 1 and 2 each select a node with a smallest node number from respective nodes as a preemption representative. The preemption representatives of both the data centers 1 and 2 determine whether a fault has occurred in a cluster in the respective data center. If a fault has occurred in a cluster in one data center, and no fault has occurred in any cluster in the other data center, a preemption representative of the data center in which no fault has occurred attempts to preempt the arbitration device and succeeds in the preemption.

If no fault has occurred in any cluster in the two data centers, one of the preemption representatives of the two data centers that is the first to preempt the arbitration device succeeds in the preemption. All clusters in the data center whose preemption representative has succeeded in preemption continue to survive, so that the data center continues service provision, while all clusters in the other data center "kill themselves" and stop service provision.

If the preemption representatives of both the two data centers detect that a fault has occurred in a cluster in the respective data center, both the preemption representatives further detect whether the preemption representative of the other data center has successfully preempted the arbitration device within a preset time. When it is determined that the preemption representative of the other data center has not successfully preempted the arbitration device, the VIS cluster, the Oracle RAC cluster, the virtual machine cluster, and the core switch cluster in each of the two data centers use respective original arbitration mechanisms of the clusters to attempt to preempt the arbitration device.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided by the present application, it should be understood that the disclosed system, apparatus, and method may be implemented in other manners. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention, as defined by the attached claims.

## Claims

1. A cluster arbitration method, comprising:
detecting (101) whether a fault has occurred in a first cluster group or a second cluster group, wherein the first cluster group comprises one portion of nodes of a first cluster and one portion of nodes of a second cluster, the second cluster group comprises another portion of nodes of the first cluster and another portion of nodes of the second cluster, and the first cluster and the second cluster cooperate with each other; and
when detecting that a fault has occurred, determining (102) respectively, by the first cluster group and the second cluster group, respective preemption representatives, wherein both the preemption representative of the first cluster group and the preemption representative of the second cluster group respectively perform the following steps:
determining (103) whether a fault has occurred in the respective cluster group; and
if no fault has occurred in the respective cluster group, attempting to preempt an arbitration device, if a fault has occurred in the respective cluster group, quitting to preempt the arbitration device, wherein a cluster group whose preemption representative has successfully preempted the arbitration device according to a preset arbitration mechanism survives and continues service provision.

2. The cluster arbitration method according to claim 1, wherein both the preemption representative of the first cluster group and the preemption representative of the second cluster group further respectively perform the following step:
if determining that a fault has occurred in the respective cluster group, detecting (104) whether the other cluster group has attempted to preempt the arbitration device within a preset time, wherein, if the other cluster group has not attempted to preempt the arbitration device within the preset time, the first cluster attempts to preempt the arbitration device by using a first preset mechanism, or the second cluster attempts to preempt the arbitration device by using a second preset mechanism.

3. The cluster arbitration method according to claim 1, after the determining whether a fault has occurred in the respective cluster group, further comprising:
when both the preemption representative of the first cluster group and the preemption representative of the second cluster group respectively determine that no fault has occurred in the respective cluster group, attempting, by both the preemption representative of the first cluster group and the preemption representative of the second cluster group, to preempt the arbitration device, wherein it is preset that the preemption representative of the second cluster group makes a concession.

4. The cluster arbitration method according to claim 3, wherein the preset arbitration mechanism is that a preemption representative that is the first to preempt the arbitration device preempts the arbitration device successfully; and
that it is preset that the preemption representative of the second cluster group makes a concession specifically comprises:
presetting that the preemption representative of the second cluster group attempts to preempt the arbitration device a preset time later after determining that no fault has occurred in the respective cluster group.

5. The cluster arbitration method according to claim 1, wherein the first cluster group and the second cluster group are located in active-active data centers, wherein the first cluster group is located in one data center, and the second cluster group is located in the other data center.

6. A multi-cluster cooperation system, comprising:
a first cluster group, a second cluster group, and an arbitration device, wherein the first cluster group comprises one portion of nodes of a first cluster and one portion of nodes of a second cluster, the second cluster group comprises another portion of nodes of the first cluster and another portion of nodes of the second cluster, the first cluster and the second cluster cooperate with each other, and the arbitration device is provided with a preset arbitration mechanism;
both the first cluster group and the second cluster group are respectively configured to determine respective preemption representatives when detecting that a fault has occurred in the first cluster group and the second cluster group; and
both the preemption representative of the first cluster group and the preemption representative of the second cluster group are respectively configured to determine whether a fault has occurred in the respective cluster group; and if no fault has occurred in the respective cluster group, attempt to preempt the arbitration device, if a fault has occurred in the respective cluster group, quit to preempt the arbitration device, wherein a cluster group whose preemption representative has successfully preempted the arbitration device according to the preset arbitration mechanism survives and continues service provision.

7. The multi-cluster cooperation system according to claim 6, wherein
the arbitration device is further provided with a first preset mechanism and a second preset mechanism; and
both the preemption representative of the first cluster group and the preemption representative of the second cluster group are further configured to: when determining that a fault has occurred in the respective cluster group, detect whether the other cluster group has attempted to preempt the arbitration device within a preset time; wherein, if the other cluster group has not attempted to preempt the arbitration device within the preset time, the first cluster attempts to preempt the arbitration device by using the first preset mechanism, or the second cluster attempts to preempt the arbitration device by using the second preset mechanism.

8. The multi-cluster cooperation system according to claim 6, wherein
the preemption representative of the second cluster group is further configured to make a concession when both the preemption representative of the first cluster group and the preemption representative of the second cluster group respectively determine that no fault has occurred in the respective cluster group, and when both the preemption representative of the first cluster group and the preemption representative of the second cluster group respectively attempt to preempt the arbitration device.

9. The multi-cluster cooperation system according to claim 8, wherein the preset arbitration mechanism is that a preemption representative that is the first to preempt the arbitration device preempts the arbitration device successfully; and
the preemption representative of the second cluster group is specifically configured to attempt to preempt the arbitration device a preset time later after determining that no fault has occurred in the respective cluster group.

10. The multi-cluster cooperation system according to claim 6, wherein
the multi-cluster cooperation system is active-active data centers, wherein the first cluster group is located in one data center, and the second cluster group is located in the other data center.

## Patentansprüche

1. Cluster-Arbitrierungsverfahren, umfassend:
Detektieren (101), ob ein Fehler in einer ersten Cluster-Gruppe oder einer zweiten Cluster-Gruppe aufgetreten ist, wobei die erste Cluster-Gruppe einen Teil von Knoten eines ersten Clusters und einen Teil von Knoten eines zweiten Clusters umfasst, die zweite Cluster-Gruppe einen anderen Teil von Knoten des ersten Clusters und einen anderen Teil von Knoten des zweiten Clusters umfasst und der erste Cluster und der zweite Cluster miteinander kooperieren; und
wenn detektiert wird, dass ein Fehler aufgetreten ist, Bestimmen (102) jeweils durch die erste Cluster-Gruppe und die zweite Cluster-Gruppe von jeweiligen Präemptionsrepräsentanten, wobei sowohl der Präemptionsrepräsentant der ersten Cluster-Gruppe als auch der Präemptionsrepräsentant der zweiten Cluster-Gruppe jeweils die folgenden Schritte durchführen:
Bestimmen (103), ob ein Fehler in der jeweiligen Cluster-Gruppe aufgetreten ist; und,
falls kein Fehler in der jeweiligen Cluster-Gruppe aufgetreten ist, Versuchen, eine Arbitrierungseinrichtung vorzubelegen, falls ein Fehler in der jeweiligen Cluster-Gruppe aufgetreten ist, Beenden, die Arbitrierungseinrichtung vorzubelegen, wobei eine Cluster-Gruppe, deren Präemptionsrepräsentant erfolgreich die Arbitrierungseinrichtung gemäß einem voreingestellten Arbitrierungsmechanismus vorbelegt hat, erhalten bleibt und mit einer Dienstbereitstellung fortfährt.

2. Cluster-Arbitrierungsverfahren nach Anspruch 1, wobei sowohl der Präemptionsrepräsentant der ersten Cluster-Gruppe als auch der Präemptionsrepräsentant der zweiten Cluster-Gruppe ferner jeweils die folgenden Schritte durchführen:
falls bestimmt wird, dass ein Fehler in der jeweiligen Cluster-Gruppe aufgetreten ist, Detektieren (104), ob die andere Cluster-Gruppe versucht hat, die Arbitrierungseinrichtung innerhalb einer voreingestellten Zeit vorzubelegen, wobei, falls die andere Cluster-Gruppe nicht versucht hat, die Arbitrierungseinrichtung innerhalb der voreingestellten Zeit vorzubelegen, die erste Cluster-Gruppe versucht, die Arbitrierungseinrichtung unter Verwendung eines ersten voreingestellten Mechanismus vorzubelegen, oder die zweite Cluster-Gruppe versucht, die Arbitrierungseinrichtung unter Verwendung eines zweiten voreingestellten Mechanismus vorzubelegen.

3. Cluster-Arbitrierungsverfahren nach Anspruch 1, das nach dem Bestimmen, ob ein Fehler in der jeweiligen Cluster-Gruppe aufgetreten ist, ferner Folgendes umfasst:
wenn sowohl der Präemptionsrepräsentant der ersten Cluster-Gruppe als auch der Präemptionsrepräsentant der zweiten Cluster-Gruppe jeweils bestimmt, dass kein Fehler in der jeweiligen Cluster-Gruppe aufgetreten ist, Versuchen, durch sowohl den Präemptionsrepräsentanten der ersten Cluster-Gruppe als auch den Präemptionsrepräsentanten der zweiten Cluster-Gruppe, die Arbitrierungseinrichtung vorzubelegen, wobei voreingestellt ist, dass der Präemptionsrepräsentant der zweiten Cluster-Gruppe ein Zugeständnis macht.

4. Cluster-Arbitrierungsverfahren nach Anspruch 3, wobei der voreingestellte Arbitrierungsmechanismus ist, dass ein Präemptionsrepräsentant, der der erste ist, der die Arbitrierungseinrichtung vorbelegt, die Arbitrierungseinrichtung erfolgreich vorbelegt; und,
dass voreingestellt ist, dass der Präemptionsrepräsentant der zweiten Cluster-Gruppe ein Zugeständnis macht, spezifisch Folgendes umfasst:
Voreinstellen, dass der Präemptionsrepräsentant der zweiten Cluster-Gruppe versucht, die Arbitrierungseinrichtung eine voreingestellte Zeit später nach dem Bestimmen, dass kein Fehler in der jeweiligen Cluster-Gruppe aufgetreten ist, vorzubelegen.

5. Cluster-Arbitrierungsverfahren nach Anspruch 1, wobei sich die erste Cluster-Gruppe und die zweite Cluster-Gruppe in aktiv-aktiv Datenzentren befinden, wobei sich die erste Cluster-Gruppe in einem Datenzentrum befindet und sich die zweite Cluster-Gruppe in dem anderen Datenzentrum befindet.

6. Multi-Cluster-Kooperationssystem, umfassend:
eine erste Cluster-Gruppe, eine zweite Cluster-Gruppe und eine Arbitrierungseinrichtung, wobei die erste Cluster-Gruppe einen Teil von Knoten eines ersten Clusters und einen Teil von Knoten eines zweiten Clusters umfasst, die zweite Cluster-Gruppe einen anderen Teil von Knoten des ersten Clusters und einen anderen Teil von Knoten des zweiten Clusters umfasst, der erste Cluster und der zweite Cluster miteinander kooperieren und die Arbitrierungseinrichtung mit einem voreingestellten Arbitrierungsmechanismus ausgestattet ist;
sowohl die erste Cluster-Gruppe als auch die zweite Cluster-Gruppe jeweils ausgelegt ist zum Bestimmen jeweiliger Präemptionsrepräsentanten, wenn detektiert wird, dass ein Fehler in der ersten Cluster-Gruppe und der zweiten Cluster-Gruppe aufgetreten ist; und
sowohl der Präemptionsrepräsentant der ersten Cluster-Gruppe als auch der Präemptionsrepräsentant der zweiten Cluster-Gruppe jeweils ausgelegt ist zum Bestimmen, ob ein Fehler in der jeweiligen Cluster-Gruppe aufgetreten ist; und falls kein Fehler in der jeweiligen Cluster-Gruppe aufgetreten ist, Versuchen, die Arbitrierungseinrichtung vorzubelegen, falls ein Fehler in der jeweiligen Cluster-Gruppe aufgetreten ist, Beenden, die Arbitrierungseinrichtung vorzubelegen, wobei eine Cluster-Gruppe, deren Präemptionsrepräsentant die Arbitrierungseinrichtung gemäß dem voreingestellten Arbitrierungsmechanismus erfolgreich vorbelegt hat, erhalten bleibt und mit einer Dienstbereitstellung fortfährt.

7. Multi-Cluster-Kooperationssystem nach Anspruch 6, wobei
die Arbitrierungseinrichtung ferner mit einem ersten voreingestellten Mechanismus und einem zweiten voreingestellten Mechanismus ausgestattet ist und
sowohl der Präemptionsrepräsentant der ersten Cluster-Gruppe als auch der Präemptionsrepräsentant der zweiten Cluster-Gruppe ferner zu Folgendem ausgelegt ist: wenn bestimmt wird, dass ein Fehler in der jeweiligen Cluster-Gruppe aufgetreten ist, Detektieren, ob die andere Cluster-Gruppe versucht hat, die Arbitrierungseinrichtung innerhalb einer voreingestellten Zeit vorzubelegen; wobei, falls die andere Cluster-Gruppe nicht versucht hat, die Arbitrierungseinrichtung innerhalb der voreingestellten Zeit vorzubelegen, der erste Cluster versucht, die Arbitrierungseinrichtung unter Verwendung des ersten voreingestellten Mechanismus vorzubelegen, oder der zweite Cluster versucht, die Arbitrierungseinrichtung unter Verwendung des zweiten voreingestellten Mechanismus vorzubelegen.

8. Multi-Cluster-Kooperationssystem nach Anspruch 6, wobei
der Präemptionsrepräsentant der zweiten Cluster-Gruppe ferner ausgelegt ist zum Machen eines Zugeständnisses, wenn sowohl der Präemptionsrepräsentant der ersten Cluster-Gruppe als auch der Präemptionsrepräsentant der zweiten Cluster-Gruppe jeweils bestimmt, dass kein Fehler in der jeweiligen Cluster-Gruppe aufgetreten ist, und wenn sowohl der Präemptionsrepräsentant der ersten Cluster-Gruppe als auch der Präemptionsrepräsentant der zweiten Cluster-Gruppe jeweils versucht, die Arbitrierungseinrichtung vorzubelegen.

9. Multi-Cluster-Kooperationssystem nach Anspruch 8, wobei der voreingestellte Arbitrierungsmechanismus ist, dass ein Präemptionsrepräsentant, der der erste ist, die Arbitrierungseinrichtung vorzubelegen, die Arbitrierungseinrichtung erfolgreich vorbelegt; und
der Präemptionsrepräsentant der zweiten Cluster-Gruppe spezifisch ausgelegt ist zum Versuchen, die Arbitrierungseinrichtung eine voreingestellte Zeit später nach dem Bestimmen, dass kein Fehler in der jeweiligen Cluster-Gruppe aufgetreten ist, vorzubelegen.

10. Multi-Cluster-Kooperationssystem nach Anspruch 6, wobei
das Multi-Cluster-Kooperationssystem aktiv-aktiv Datenzentren ist, wobei sich die erste Cluster-Gruppe in einem Datenzentrum befindet und sich die zweite Cluster-Gruppe in dem anderen Datenzentrum befindet.

## Revendications

1. Procédé d'arbitrage de grappes, comprenant de :
détecter (101) si un défaut s'est produit dans un premier groupe de grappes ou un second groupe de grappes, dans lequel le premier groupe de grappes comprend une partie de noeuds d'une première grappe et une partie de noeuds d'une seconde grappe, le second groupe de grappes comprend une autre partie de noeuds de la première grappe et une autre partie de noeuds de la seconde grappe, et la première grappe et la seconde grappe coopèrent l'une avec l'autre ; et
lorsqu'il est détecté qu'un défaut s'est produit, déterminer (102) respectivement, par le premier groupe de grappes et le second groupe de grappes, des représentants de préemption respectifs, dans lequel le représentant de préemption du premier groupe de grappes et le représentant de préemption du second groupe de grappes effectuent tous deux respectivement les étapes suivantes :
déterminer (103) si un défaut s'est produit dans le groupe de grappes respectif ; et
si aucun défaut ne s'est produit dans le groupe de grappes respectif, tenter de préempter un dispositif d'arbitrage, si un défaut s'est produit dans le groupe de grappes respectif, cesser de préempter le dispositif d'arbitrage, dans lequel un groupe de grappes dont le représentant de préemption a préempté avec succès le dispositif d'arbitrage selon un mécanisme d'arbitrage prédéfini survit et poursuit la fourniture de service.

2. Procédé d'arbitrage de grappes selon la revendication 1, dans lequel le représentant de préemption du premier groupe de grappes et le représentant de préemption du second groupe de grappes effectuent tous deux respectivement l'étape suivante :
s'il est déterminé qu'un défaut s'est produit dans le groupe de grappes respectif, détecter (104) si l'autre groupe de grappes a tenté de préempter le dispositif d'arbitrage dans un temps prédéfini, dans lequel, si l'autre groupe de grappes n'a pas tenté de préempter le dispositif d'arbitrage dans le temps prédéfini, la première grappe tente de préempter le dispositif d'arbitrage en utilisant un premier mécanisme prédéfini, ou la seconde grappe tente de préempter le dispositif d'arbitrage en utilisant un second mécanisme prédéfini.

3. Procédé d'arbitrage de grappes selon la revendication 1, après avoir déterminé si un défaut s'est produit dans le groupe de grappes respectif, comprenant en outre de :
lorsque le représentant de préemption du premier groupe de grappes et le représentant de préemption du second groupe de grappes déterminent tous deux respectivement qu'aucun défaut ne s'est produit dans le groupe de grappes respectif, tenter, à la fois par le représentant de préemption du premier groupe de grappes et le représentant de préemption du second groupe de grappes, de préempter le dispositif d'arbitrage, dans lequel il est prédéfini que le représentant de préemption du second groupe de grappes fasse une concession.

4. Procédé d'arbitrage de grappes selon la revendication 3, dans lequel le mécanisme d'arbitrage prédéfini est qu'un représentant de préemption qui est le premier à préempter le dispositif d'arbitrage préempte le dispositif d'arbitrage avec succès ; et
qu'il soit prédéfini que le représentant de préemption du second groupe de grappes fasse une concession comprend spécifiquement de :
prédéfinir que le représentant de préemption du second groupe de grappes tente de préempter le dispositif d'arbitrage un temps prédéfini après avoir déterminé qu'aucun défaut ne s'est produit dans le groupe de grappes respectif.

5. Procédé d'arbitrage de grappes selon la revendication 1, dans lequel le premier groupe de grappes et le second groupe de grappes sont situés dans des centres de données actifs-actifs, dans lequel le premier groupe de grappes est situé dans un centre de données, et le second groupe de grappes est situé dans l'autre centre de données.

6. Système de coopération multi-grappes, comprenant :
un premier groupe de grappes, un second groupe de grappes, et un dispositif d'arbitrage, dans lequel le premier groupe de grappes comprend une partie de noeuds d'une première grappe et une partie de noeuds d'une seconde grappe, le second groupe de grappes comprend une autre partie de noeuds de la première grappe et une autre partie de noeuds de la seconde grappe, la première grappe et la seconde grappe coopèrent l'une avec l'autre, et le dispositif d'arbitrage est doté d'un mécanisme d'arbitrage prédéfini ;
le premier groupe de grappes et le second groupe de grappes sont tous deux configurés respectivement pour déterminer des représentants de préemption respectifs lorsqu'il est détecté qu'un défaut s'est produit dans le premier groupe de grappes et dans le second groupe de grappes ; et
le représentant de préemption du premier groupe de grappes et le représentant de préemption du second groupe de grappes sont tous deux configurés respectivement pour déterminer si un défaut s'est produit dans le groupe de grappes respectif ; et si aucun défaut ne s'est produit dans le groupe de grappes respectif, tenter de préempter le dispositif d'arbitrage, si un défaut s'est produit dans le groupe de grappes respectif, cesser de préempter le dispositif d'arbitrage, dans lequel un groupe de grappes dont le représentant de préemption a préempté avec succès le dispositif d'arbitrage selon le mécanisme d'arbitrage prédéfini survit et poursuit la fourniture de service.

7. Système de coopération multi-grappes selon la revendication 6, dans lequel
le dispositif d'arbitrage est en outre pourvu d'un premier mécanisme prédéfini et d'un second mécanisme prédéfini ; et
le représentant de préemption du premier groupe de grappes et le représentant de préemption du second groupe de grappes sont tous deux en outre configurés pour : lorsqu'il est déterminé qu'un défaut s'est produit dans le groupe de grappes respectif, détecter si l'autre groupe de grappes a tenté de préempter le dispositif d'arbitrage dans un temps prédéfini ; dans lequel, si l'autre groupe de grappes n'a pas tenté de préempter le dispositif d'arbitrage dans le temps prédéfini, la première grappe tente de préempter le dispositif d'arbitrage en utilisant le premier mécanisme prédéfini, ou la seconde grappe tente de préempter le dispositif d'arbitrage en utilisant le second mécanisme prédéfini.

8. Système de coopération multi-grappes selon la revendication 6, dans lequel
le représentant de préemption du second groupe de grappes est en outre configuré pour faire une concession lorsque le représentant de préemption du premier groupe de grappes et le représentant de préemption du second groupe de grappes déterminent tous deux respectivement qu'aucun défaut ne s'est produit dans le groupe de grappes respectif, et lorsque le représentant de préemption du premier groupe de grappes et le représentant de préemption du second groupe de grappes tentent tous deux respectivement de préempter le dispositif d'arbitrage.

9. Système de coopération multi-grappes selon la revendication 8, dans lequel le mécanisme d'arbitrage prédéfini est qu'un représentant de préemption qui est le premier à préempter le dispositif d'arbitrage préempte le dispositif d'arbitrage avec succès ; et
le représentant de préemption du second groupe de grappes est spécifiquement configuré pour tenter de préempter le dispositif d'arbitrage un temps prédéfini après avoir déterminé qu'aucun défaut ne s'est produit dans le groupe de grappes respectif.

10. Système de coopération multi-grappes selon la revendication 6, dans lequel
le système de coopération multi-grappes est un centre de données actif-actif, dans lequel le premier groupe de grappes est situé dans un centre de données, et le second groupe de grappes est situé dans l'autre centre de données.
